# EUROPEAN PATENT APPLICATION

(11) **EP 4 660 813 A1**
(43) Date of publication of application: **10.12.2025**
(21) Application number: 24216985.2
(22) Date of filing: 03.12.2024
(51) Int. Cl.: G06F 11/34, G06F 3/06

(54) **CONTROL DEVICE, MEMORY SYSTEM AND COMPUTING SYSTEM**

(30) Priority: 03.06.2024 KR 20240072201
(71) Applicant: SK hynix Inc., Bubal-eub Icheon-si Gyeonggi-do 17336 (KR)
(72) Inventor: CHOI, Jung Min, 17336 Icheon-si, Gyeonggi-do (KR)
(74) Representative: Isarpatent

(57) **Abstract**

In an embodiment of the present disclosure, operation frequency information on a memory region of a memory system is managed by the unit of a first size, and operation frequency information is managed by the unit of a second size smaller than the first size according to the operation frequency information by the unit of the first size. Therefore, by providing operation frequency information to a host device which is allocated and uses a memory region while efficiently using a storage space for operation frequency information, the management load of the host device may be reduced, and data processing performance by the host device may be improved.

## Description

### BACKGROUND

### 1. Technical Field

Embodiments of the present disclosure relate to a control device, a memory system and a computing system.

### 2. Related Art

The processor of a computing system may store data and perform processing on the data using memory. For example, the processor may perform data processing while communicating with the memory through a first interface. The processor may perform data processing while communicating with an additional memory through a second interface.

The additional memory may be occupied by the processor, or may be accessible by at least two processors. Each of the at least two processors may be allocated, occupy and use some of the memory regions of the additional memory, or may share and use corresponding memory regions.

Since the size of memory regions usable by the processor is increased by using the additional memory, data processing performance by the processor may be improved.

However, because the delay time of the additional memory communicating through the second interface may be longer than the delay time of the memory communicating through the first interface, measures capable of efficiently performing data processing using additional memories are required.

### SUMMARY

Embodiments of the present disclosure are directed to providing measures capable of improving data processing performance using a memory system while managing information on the characteristics of data stored in the memory system.

In an embodiment, a memory system may include: at least one memory including a plurality of unit storage regions, each of the plurality of unit storage regions including a plurality of unit storage sub-regions; and a monitoring unit configured to generate and manage first operation frequency information based on an operation frequency of at least one of the plurality of unit storage regions, and to generate and manage second operation frequency information based on an operation frequency of each of the plurality of unit storage sub-regions included in some of the plurality of unit storage regions in which the first operation frequency information exists among the plurality of unit storage regions.

In an embodiment, a control device may include: a buffer memory; and a monitoring unit configured to generate first operation frequency information based on an operation frequency of at least one of a plurality of unit storage regions included in an external memory, store the first operation frequency information in the buffer memory, generate second operation frequency information based on an operation frequency of each of a plurality of unit storage sub-regions included in some of unit storage regions in which the first operation frequency information exists among the plurality of unit storage regions, and store the second operation frequency information in the buffer memory.

In an embodiment, a computing system may include: a host device; and a memory device including a plurality of storage regions, and configured to allocate at least a part of the plurality of storage regions according to a request from the host device, generate and manage operation frequency information based on an operation frequency of a storage region allocated to the host device among the plurality of storage regions and provide the operation frequency information to the host device.

According to the embodiments of the present disclosure, information on the characteristics of data stored in memory regions of a memory system may be efficiently managed, and data processing efficiency using the memory system may be improved through management of the memory regions and the data on the basis of the characteristics of the data.

### BRIEF DESCRIPTION OF THE DRAWINGS

FIG. 1 is a diagram illustrating an example of the schematic configuration of a memory system according to an embodiment of the present disclosure.
FIG. 2 is a diagram illustrating a schematic configuration of a memory system according to an embodiment of the present disclosure.
FIGS. 3 and 4 are diagrams illustrating an example of an operation method of a monitoring unit of the memory system according to the embodiment of the present disclosure.
FIG. 5 is a diagram illustrating monitoring units of a memory system managing operation frequency information according to an embodiment of the present disclosure.
FIGS. 6 to 9 are diagrams illustrating examples of methods of storing and managing operation frequency information by a monitoring unit using a buffer memory according to embodiments of the present disclosure.
FIGS. 10 and 11 are diagrams illustrating a method in which a monitoring unit of a memory system manages operation frequency information according to an embodiment of the present disclosure.

### DETAILED DESCRIPTION

In the following description of examples or embodiments of the present disclosure, reference will be made to the accompanying drawings in which it is shown by way of illustration specific examples or embodiments that can be implemented, and in which the same reference numerals and signs can be used to designate the same or like components even when they are shown in different accompanying drawings. Further, in the following description of examples or embodiments of the present disclosure, detailed descriptions of well-known functions and components incorporated herein will be omitted when it is determined that the description may make the subject matter in some embodiments of the present disclosure more unclear. The terms such as "including", "having", "containing", "constituting" "make up of", and "formed of" used herein are generally intended to allow other components to be added unless the terms are used with the term "only". As used herein, singular forms are intended to include plural forms unless the context clearly indicates otherwise.

Terms, such as "first", "second", "A", "B", "(A)", or "(B)" may be used herein to describe elements of the present disclosure. Each of these terms is not used to define essence, order, sequence, or number of elements etc., but is used merely to distinguish the corresponding element from other elements.

When it is mentioned that a first element "is connected or coupled to", "contacts or overlaps" etc. a second element, it should be interpreted that, not only can the first element "be directly connected or coupled to" or "directly contact or overlap" the second element, but a third element can also be "interposed" between the first and second elements, or the first and second elements can "be connected or coupled to", "contact or overlap", etc. each other via a fourth element. Here, the second element may be included in at least one of two or more elements that "are connected or coupled to", "contact or overlap", etc. each other.

When time relative terms, such as "after," "subsequent to," "next," "before," and the like, are used to describe processes or operations of elements or configurations, or flows or steps in operating, processing, or manufacturing methods, these terms may be used to describe nonconsecutive or non-sequential processes or operations unless the term "directly" or "immediately" is used together.

In addition, when any dimensions, relative sizes etc. are mentioned, it should be considered that numerical values for elements or features, or corresponding information (e.g., level, range, etc.) include a tolerance or error more that may be caused by various factors (e.g., process factors, internal or external impact, noise, etc.) even when a relevant description is not specified. Further, the term "may" fully encompasses all the meanings of the term "can".

Hereinafter, various embodiments of the present disclosure will be described in detail with reference to accompanying drawings.

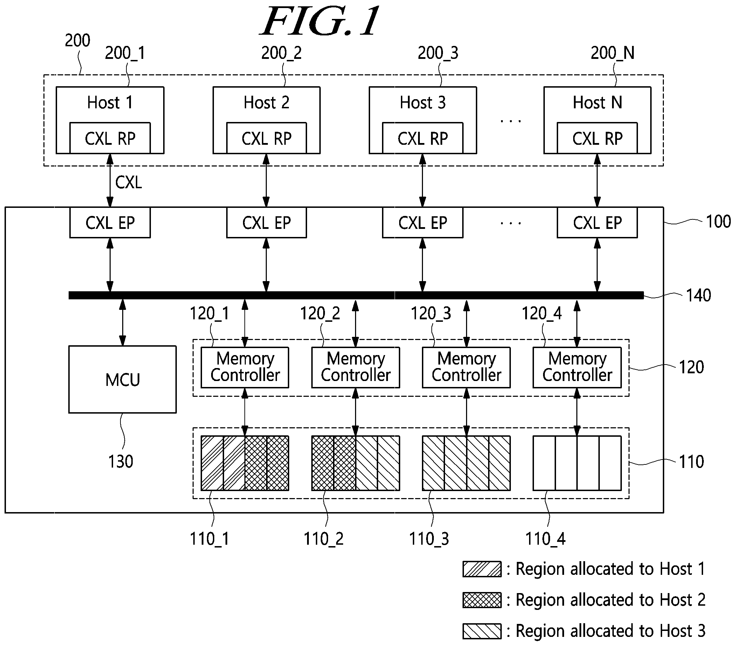

FIG. 1 is a diagram illustrating an example of the schematic configuration of a memory system according to an embodiment of the present disclosure.

Referring to FIG. 1, a memory system 100 may include at least one memory 110 that includes four partial memories 110_1, 110_2, 110_3 and 110_4, but embodiments of the present disclosure are not limited thereto with respect to the number of partial memories within the memory 110. In the present specification, the memory system 100 may also be referred to as a memory device. And also, each of four partial memories may be a separate memory. For example, each of four partial memories may be a first partial memory 110_1, a second partial memory 110_2, a third partial memory 110_3, and a fourth partial memory 110_4. The memory system 100 may include at least one separate memory, and FIG. 1 illustrates an example that the memory system 100 includes four memories like as a first partial memory 110_1, a second partial memory 110_2, a third partial memory 110_3, and a fourth partial memory 110_4.

The memory 110 may be, for example, a volatile memory such as a DRAM, an SDRAM, a DDR SDRAM, an LPDDR SDRAM and a GDDR SDRAM, but embodiments of the present disclosure are not limited thereto. The memory 110 may include nonvolatile memory. A memory 110 included in the memory system 100 may be a volatile memory, and other partial memories may be nonvolatile memory. Embodiments of the present disclosure may be implemented when only one memory 110 is included in the memory system 100.

The memory system 100 may include a memory controller 120 that controls the operation of a memory 110. The memory controller 120 may control an operation of writing data to the memory 110 or reading data written to the memory 110. For example, the memory system 100 may include four memory sub-controllers 120_1, 120_2, 120_3 and 120_4, which control the operations of the four partial memories 110_1, 110_2, 110_3 and 110_4, respectively. In other embodiments, one memory sub-controller of the memory controller 120 may control the operations of at least two partial memories in the memory 110.

The memory system 100 may include a control unit 130 (MCU). The control unit 130 may control the memory 110 through the memory controller 120 while communicating with a device located outside the memory system 100. As in the example illustrated in FIG. 1, the control unit 130 may be disposed separately from the memory controller 120. In other embodiments, at least some of the functions of the control unit 130 may be integrated into the memory controller 120. In addition, in some embodiments, the memory system 100 may be configured with at least some of the functions of the memory controller 120 are integrated into the control unit 130.

The control unit 130 may communicate with the memory controller 120 through a bus 140 inside the memory system 100.

The control unit 130 may allocate or deallocate memory regions included in the memory 110 according to a request from a host device 200. For example, the control unit 130 may manage the allocation of information to memory regions using an auxiliary memory, which is located inside or outside the control unit 130.

The control unit 130 may allocate memory regions of the memory 110 while communicating with a host device 200.

In some embodiments, the control unit 130 may allocate memory regions of the memory 110 while communicating with at least two hosts of the host device 200. In FIG. 1, the memory system 100 allocates memory regions of the memory 110 while communicating with an N number of host devices 200_1, 200_2, 200_3, ..., 200_N.

The control unit 130 may allocate memory regions of the memory 110 to at least two host devices 200.

For example, referring to FIG. 1, the control unit 130 may allocate some of the memory regions of the first partial memory 110_1 to a first host 200_1 (Host 1). The control unit 130 may allocate other memory regions of the first partial memory 110_1 to a second host 200_2 (Host 2). The control unit 130 may allocate all of the memory regions of a partial memory, such as the third partial memory 110_3, to a third host 200_3 (Host 3).

Hosts in FIG. 1 may be allocated one or more memory regions of the memory 110. Hosts may occupy and use the allocated memory regions. Allocated memory regions may be accessible only by the host that is allocated the corresponding memory region. In other embodiments, a memory region may be shared by at least two hosts, which can access the corresponding shared memory region.

For example, the host device 200 may be a computer, an ultra mobile PC (UMPC), a workstation, a personal digital assistant (PDA), a tablet, a mobile phone, a smartphone, an e-book, a portable multimedia player (PMP), a portable game player, a navigation device, a black box, a digital camera, a digital multimedia broadcasting (DMB) player, a smart television, a digital audio recorder, a digital audio player, a digital picture recorder, a digital picture player, a digital video recorder, a digital video player, a storage configuring a data center, one of various electronic devices configuring a home network, one of various electronic devices configuring a telematics network, an RFID (radio frequency identification) device, a mobility device (e.g., a vehicle, a robot or a drone) capable of traveling under human control or autonomous driving, or the like. Alternatively, the host device 200 may be a virtual/augmented reality device that provides a 2D or 3D virtual reality image or augmented reality image. The host device 200 is not limited to the examples described above and may be any one of various electronic devices that needs to interact with a memory system 100 capable of storing data.

The host device 200 may include at least one operating system (not illustrated). The operating system may manage and control overall functions and operations of the host device 200. The operating system may control the interoperation between the host device 200 and the memory system 100. The operating system may be classified as a general operating system or a mobile operating system depending on the mobility of the host device 200.

The host device 200 and the memory system 100 may be collectively referred to as a computing system.

The host device 200 may perform communication with the memory system 100 through a preset interface.

For example, the host device 200 may communicate with the memory system 100 through the Compute Express Link (CXL) interface. The host device 200 may be set as a CXL root point, and the memory system 100 may be set as a CXL end point.

Since the host device 200 communicates with the memory system 100 through a CXL interface, a high-bandwidth access environment with a relatively reduced delay may be implemented in a structure in which the host device 200 is located outside of the memory system 100 and in which the host device 200 communicates with a high-capacity memory 110 within the memory system 100.

In other embodiments, a host device 200 may communicate with a memory system 100 through an interface other than a CXL interface.

For example, a host device 200 and a memory system 100 may communicate through at least one from among various interface protocols such as a USB (universal serial bus) protocol, an MMC (multimedia card) protocol, a PCI (peripheral component interconnection) protocol, a PCI-E (PCI-express) protocol, an ATA (advanced technology attachment) protocol, a serial-ATA protocol, a parallel-ATA protocol, an SCSI (small computer system interface) protocol, an ESDI (enhanced small disk interface) protocol and an IDE (integrated drive electronics) protocol, but examples are not limited to the above list.

Thus, embodiments of the disclosure may be implemented with various types and numbers of hosts that perform communication with the memory system 100 and with various types and kinds of communication interfaces between the host device 200 and the memory system 100. Hereinafter, an example will be described with at least two hosts communicating with the memory system 100 through a CXL interface.

The host device 200 may perform data processing using a local memory in addition to the memory system 100. The local memory may be a volatile memory. The communication speed between the local memory and the host device 200 may be faster than the communication speed between the memory system 100 and the host device 200.

The host device 200 may additionally use memory regions of the memory system 100 while performing data processing using a local memory. Data processing performance by the host device 200 may be improved with the addition of available memory regions.

In embodiments of the disclosure, by managing characteristics of data stored in the memory system 100 and providing corresponding information to the host device 200, data processing efficiency by the host device 200, which also uses local memory, and the memory system 100 may be improved.

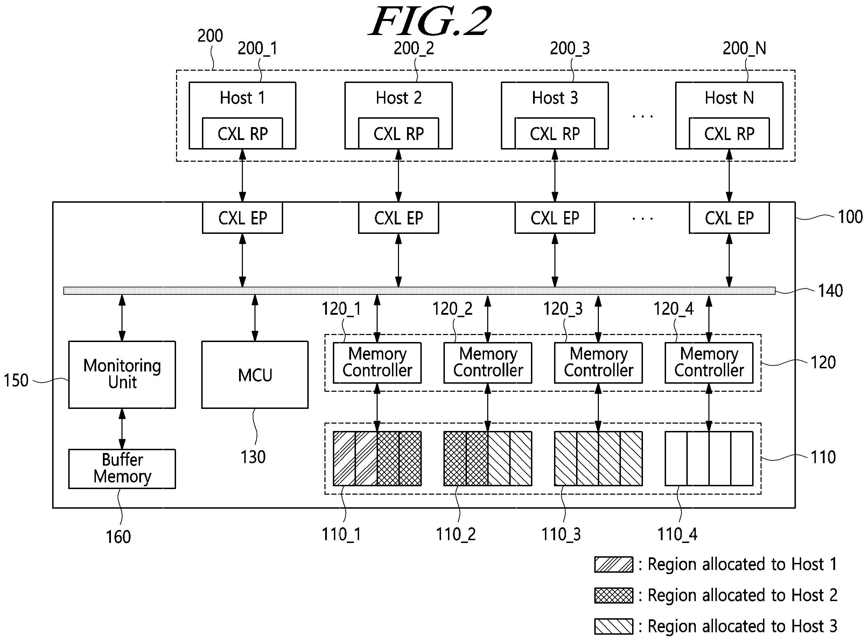

FIG. 2 is a diagram illustrating a schematic configuration of a memory system according to an embodiment of the present disclosure.

Referring to FIG. 2, a memory system 100 may include at least one memory 110 and a memory controller 120 that controls the operation of the memory 110. The memory system 100 may include a control unit 130, which allocates and manages memory regions of the memory 110 according to a request received from the host device 200.

The memory regions of the memory 110 may be allocated to respective hosts of the host device 200 by the control unit 130. FIG. 2 illustrates an example in which the memory regions of a first partial memory 110_1, a second partial memory 110_2 and a third partial memory 110_3 are allocated to a first host 200_1 (Host 1), a second host 200_2 (Host 2) and a third host 200_3 (Host 3).

The memory system 100 may include a monitoring unit 150, which monitors the operation frequency of a memory region of the memory 110 allocated to the host device 200. The monitoring unit 150 may be disposed separately from the control unit 130, or may be disposed by being integrated with the control unit 130.

The monitoring unit 150 may monitor the operation frequency of a memory region allocated to the host device 200, and may manage operation frequency information based on the monitored operation frequency.

The operation frequency of a memory region may be, for example, an access frequency to the memory region. Alternatively, an operation frequency may be a program operation frequency for a memory region. Alternatively, an operation frequency may be a read operation frequency for a memory region. An operation frequency may mean only the frequency of program (write) operations on a corresponding memory region, or may mean only the frequency of read operations on a corresponding memory region. In another example, an operation frequency may mean a frequency obtained by summing the frequency of program operations and the frequency of read operations on a corresponding memory region. An operation frequency may include the frequency of at least one of various operations performed on a memory region allocated to the host device 200. An operation frequency may be set in various ways.

An operation frequency may be accumulated during the operation time period of the memory system 100. Alternatively, an operation frequency may be accumulated in predetermined units of time. In the latter, when the predetermined unit of time elapses, the operation frequency is reset, and an operation frequency may be accumulated again to determine a frequency value.

The type of operation frequency managed by the monitoring unit 150 may be set by the control unit 130. In other embodiments, the type of operation frequency to be monitored may be set according to a request from the host device 200, which is allocated a memory region in the memory 110. For example, a program operation frequency may be monitored for a memory region allocated to the first host 200_1, and a read operation frequency may be monitored for a memory region allocated to the second host 200_2.

The monitoring unit 150 may monitor the operation frequency of a memory region allocated to the host device 200, may manage operation frequency information based on the monitored operation frequency, and may provide the operation frequency information to the host device 200.

The monitoring unit 150 may store and manage operation frequency information in a buffer memory 160 included in the memory system 100.

The buffer memory 160 may be, for example, a volatile memory. The buffer memory 160 may be located inside the monitoring unit 150, or may be located outside the monitoring unit 150.

The buffer memory 160 may be used only by the monitoring unit 150. Alternatively, the buffer memory 160 may be used by the monitoring unit 150 and the control unit 130. A predetermined memory region in the buffer memory 160 may be allocated to the monitoring unit 150 and may be used by the monitoring unit 150.

The buffer memory 160 and the monitoring unit 150 may be collectively referred to as a control device. When the monitoring unit 150 is implemented by being integrated into the control unit 130, the control device may refer to a device that includes the control unit 130 and the buffer memory 160.

Through the monitoring unit 150, the memory system 100 may manage operation frequency information on a memory region allocated to the host device 200 and provide the operation frequency information to the host device 200. The host device 200 may efficiently perform management of data stored in the memory 110 of the memory system 100 on the basis of the operation frequency information provided from the memory system 100.

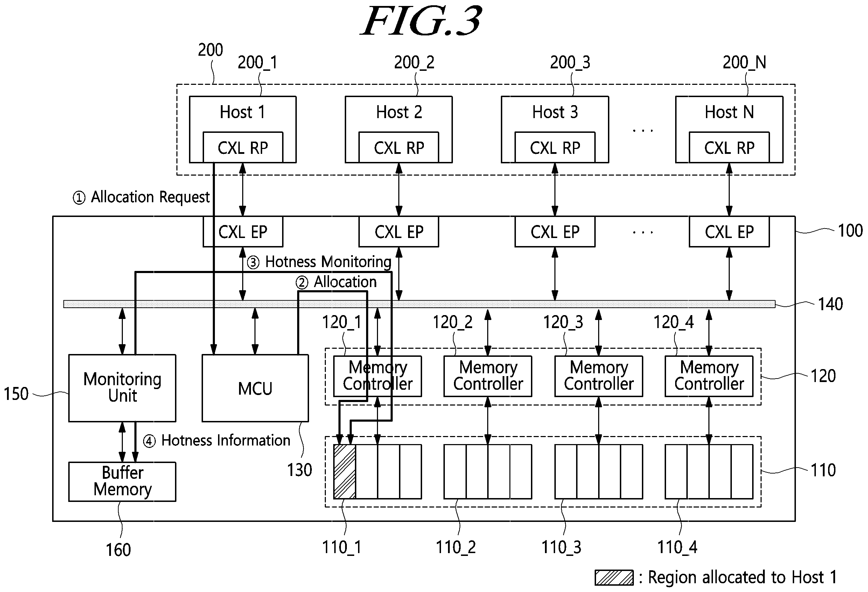

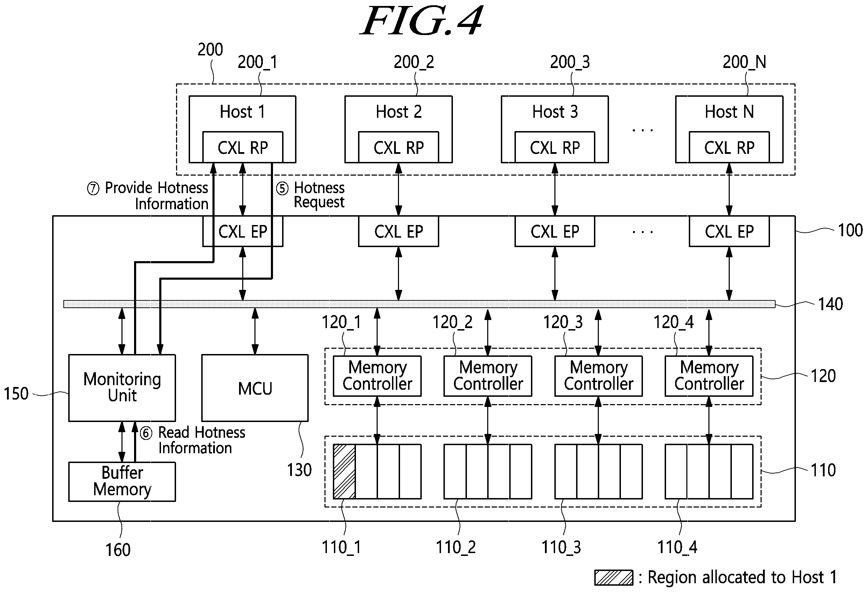

FIGS. 3 and 4 are diagrams illustrating operations of a monitoring unit of a memory system according to embodiments of the present disclosure.

Referring to FIG. 3, a first host 200_1 may send a request to the memory system 100 to allocate a memory region (①).

The control unit 130 may allocate one or more memory regions of a first partial memory 110_1 to the first host 200_1 (②).

The monitoring unit 150 may monitor the operation frequency of the memory region in the first partial memory 110_1 that is allocated to the first host 200_1 (③). The monitoring unit 150 may monitor at least one of an access frequency, a program operation frequency or a read operation frequency for the one or more memory regions allocated to the first host 200_1.

The monitoring unit 150 may store and manage, in the buffer memory 160, operation frequency information based on the monitored operation frequency of the one or more memory regions allocated to the first host 200_1 in the first partial memory 110_1 (④).

Information on characteristics of data stored in the memory region allocated to the first host 200_1 may be available to the host device 200 because the operation frequency information of the memory region is managed by the monitoring unit 150.

For example, if an operation frequency value for the memory region allocated to the first host 200_1 is high, then the data stored in the corresponding memory region may be regarded as hot data whose frequency of being used by the first host 200_1 is high.

In another example, if an operation frequency value for the memory region allocated to the first host 200_1 is low, then the data stored in the corresponding memory region may be regarded as cold data whose frequency of being used by the first host 200_1 is low.

Information on characteristics of the data stored in the memory region of the memory system 100 allocated to the first host 200_1 may be provided by the monitoring unit 150.

Since information on characteristics of the data stored in the memory region and used by the first host 200_1 is managed by the monitoring unit 150, the load of the first host 200_1 for managing characteristics of the corresponding data may be reduced. The first host 200_1 may request the operation frequency information managed by the monitoring unit 150 to check characteristics of the data stored in the memory region allocated from the memory system 100.

Referring to FIG. 4, the first host 200_1 may request, to the memory system 100, the operation frequency information of the memory region allocated to the first host 200_1 (@). The request from the first host 200_1 may be transmitted to the monitoring unit 150, or may be transmitted to the monitoring unit 150 through the control unit 130.

In response to the request from the first host 200_1, the monitoring unit 150 may read the operation frequency information of the memory region allocated to the first host 200_1, which is among operation frequency information stored in the buffer memory 160 (@).

The monitoring unit 150 may provide the operation frequency information read from the buffer memory 160 to the first host 200_1 (⑦).

The memory system 100 may provide information regarding the memory region used by the host device 200, and through monitoring of the operation frequency of the memory region, may provide information on characteristics of data stored in the memory region to the host device 200.

The host device 200 may manage the data stored in the memory system 100 using operation frequency information provided from the memory system 100.

For example, when the data stored in the memory region allocated in the memory system 100 is hot data, the host device 200 may perform data processing by copying the corresponding data to a local memory that is used by the host device 200 and that has a faster communication speed compared to the memory system 100.

In some embodiments, when the data stored in the memory region allocated in the memory system 100 is cold data, the host device 200 may delete the corresponding data and may use the allocated memory region of the memory system 100 to store different data. In other embodiments, the host device 200 may maintain the data stored in the memory region of the memory system 100 and may manage the data in the allocated memory region as cold data. In other embodiments, when the data stored in the allocated memory region of the memory system 100 is cold data, the host device 200 may copy the cold data to a local memory and may maintain the cold data in the memory region of the memory system 100. The host device 200 may obtain the information on the characteristics of the data stored in the corresponding memory region on the basis of the operation frequency information of the memory region managed by the memory system 100, and may manage the data stored in the memory system 100 in a variety of ways according to the characteristics of the corresponding data.

Since the operation frequency of a memory region is managed by the memory system 100, load on the host device 200 can be reduced without the management of characteristics of data stored in the memory system 100.

Since the host device 200 checks the characteristics of the data and performs data management on the basis of the operation frequency information provided from the memory system 100, data processing efficiency when using the memory system 100 may be improved.

In this way, according to management of operation frequency information by the monitoring unit 150 of the memory system 100, data processing performance by the host device 200 using the memory system 100 may be improved.

Furthermore, as described below, by managing operation frequency information for a memory region allocated to the host device 200 by dividing the memory region into unit regions of at least two different sizes, the monitoring unit 150 may efficiently manage the operation frequency information.

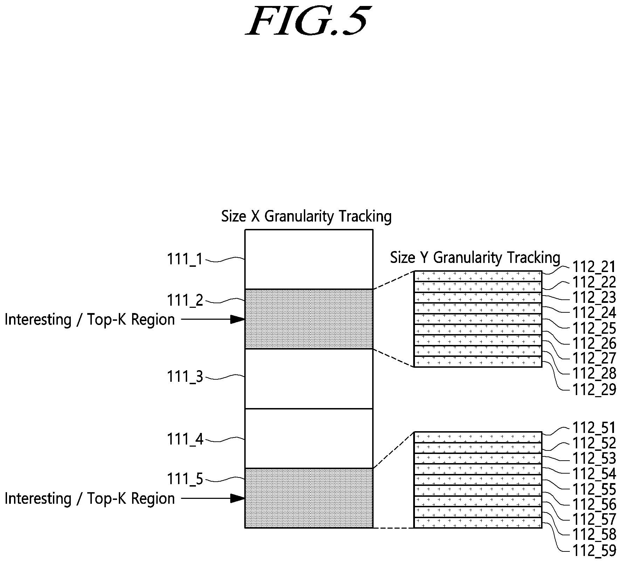

FIG. 5 is a diagram illustrating monitoring units of a memory system managing operation frequency information according to an embodiment of the present disclosure.

Referring to FIG. 5, a memory region of a memory 110, which is allocated to a host device 200, may be managed by being divided into unit storage regions.

Unit storage regions are included in a memory region of a memory 110 and may each have a first size of X, which may be 512 MB, 256 MB, 128 MB, etc., as non-limiting examples.

The first size of the unit storage regions may be constant, or may vary depending on the size of a memory region allocated to the host device 200. For example, the size of unit storage regions in a memory region allocated to a first host 200_1 may be 512 MB, and the size of unit storage regions in a memory region allocated to a second host 200_2 may be 256 M B.

Each of the unit storage regions may include a plurality of unit storage sub-regions.

For example, the unit storage sub-regions may each have a second size of Y. The second size Y may be smaller than the first size X. The second size Y may be a size set to a minimum size for data stored in a unit storage sub-region. For example, when data is written in units of 4 KB, the second size may be 4 KB, but the second size is not limited to this example and the second size may vary.

The monitoring unit 150 may manage operation frequency information based on an operation frequency for a unit storage region and an operation frequency for a unit storage sub-region. The operation frequency information of a unit storage region may be referred to as a first operation frequency information, and the operation frequency information of a unit storage sub-region may be referred to as a second operation frequency information.

For example, when a memory region is allocated to a host device 200, the monitoring unit 150 may manage operation frequencies for unit storage regions. When an operation frequency for a unit storage region satisfies a predetermined condition, the monitoring unit 150 may manage an operation frequency for each unit storage sub-region included in the unit storage region.

For example, referring to FIG. 5, the monitoring unit 150 may monitor operation frequencies on five unit storage regions 111_1, 111_2, 111_3, 111_4 and 111_5 allocated to a host device 200. The monitoring unit 150 may store and manage, in the buffer memory 160, operation frequency information for each of the five unit storage regions 111_1, 111_2, 111_3, 111_4 and 111_5 based on respective monitored operation frequencies for unit storage regions.

The monitoring unit 150 may monitor whether a frequency value according to operation frequency information for a unit storage region is equal to or greater than a preset threshold. When operation frequency information on a unit storage region is equal to or greater than the preset threshold, the monitoring unit 150 may generate operation frequency information based on the operation frequencies of the unit storage sub-regions included in the corresponding unit storage region.

For example, referring to FIG. 5, from among operation frequency information of the five unit storage regions 111_1, 111_2, 111_3, 111_4 and 111_5, operation frequency information for the second unit storage region 111_2 and operation frequency information for the fifth unit storage region 111_5 may be equal to or greater than the preset threshold.

Since operation frequencies of the second unit storage region 111_2 and the fifth unit storage region 111_5 are equal to or higher than the preset threshold, these unit storage regions (i.e., 111_2 and 111_5) may have a higher probability of having stored hot data.

The monitoring unit 150 may generate and manage operation frequency information based on operation frequencies of a plurality of unit storage sub-regions included in each of the second unit storage region 111_2 and the fifth unit storage region 111_5.

For example, the monitoring unit 150 may monitor the operation frequency of each of nine unit storage sub-regions 112_21, 112_22, 112_23, 112_24, 112_25, 112_26, 112_27, 112_28 and 112_29 included in the second unit storage region 111_2, and may store and manage operation frequency information based on the operation frequency using the buffer memory 160. The monitoring unit 150 may monitor the operation frequency of each of nine unit storage sub-regions 112_51, 112_52, 112_53, 112_54, 112_55, 112_56, 112_57, 112_58 and 112_59 included in the fifth unit storage region 111_5, and may store and manage operation frequency information based on the operation frequency using the buffer memory 160.

Since operation frequency information on each unit storage sub-region is managed, the monitoring unit 150 may provide, to the host device 200, operation frequency information for a unit storage region in which data is stored, in response to a request from the host device 200.

Since the monitoring unit 150 initially manages operation frequency information by a unit based on the first size of each unit storage region and manages operation frequency information by a unit based on the second size of each unit storage sub-region, the storage space of the buffer memory 160 used to store operation frequency information needs to be efficiently managed.

The monitoring unit 150 may store and manage operation frequency information on each unit storage region and operation frequency information on each unit storage sub-region in the same buffer memory 160.

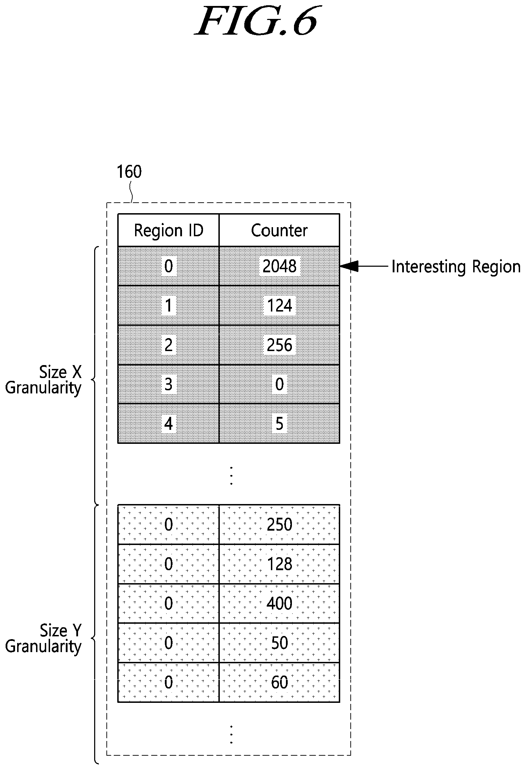

FIGS. 6 to 9 are diagrams illustrating examples of methods of storing and managing operation frequency information by a monitoring unit using a buffer memory according to embodiments of the present disclosure.

FIG. 6 illustrates an example in which a monitoring unit 150 manages operation frequency information of a unit storage region and operation frequency information of a unit storage sub-region in a buffer memory 160.

The monitoring unit 150 may manage operation frequency information in units of unit storage regions each having a first size X. In FIG. 6, among the unit storage regions with size X, a unit storage region with a region ID of 0 means that operation frequency information may be equal to or greater than a threshold.

The monitoring unit 150 may manage operation frequency information of the plurality of unit storage sub-regions included in the unit storage region with a region ID of 0, which satisfies the predetermined requirement or condition.

For example, in FIG. 6, operation frequency information, on the plurality of unit storage sub-regions with the second size of Y included in the first unit storage region with the region ID of 0, are respectively 250, 128, 400, 50, and 60 and are managed by the monitoring unit 150.

Since the monitoring unit 150 initially manages operation frequency information in units of the unit storage regions each having the first size, the size of the operation frequency information stored in the buffer memory 160 may be small.

The monitoring unit 150 manages operation frequency information in units of the unit storage sub-regions included in each unit storage region and each having the second size when the predetermined threshold is met, and provides operation frequency information when requested by the host device 200.

The monitoring unit 150 may manage operation frequency information on a memory region allocated to the host device 200 and provide the operation frequency information to the host device 200 while efficiently using the storage space of the buffer memory 160.

The monitoring unit 150 may continuously manage operation frequency information for the unit storage region after operation frequency information for a unit storage region satisfies a predetermined condition.

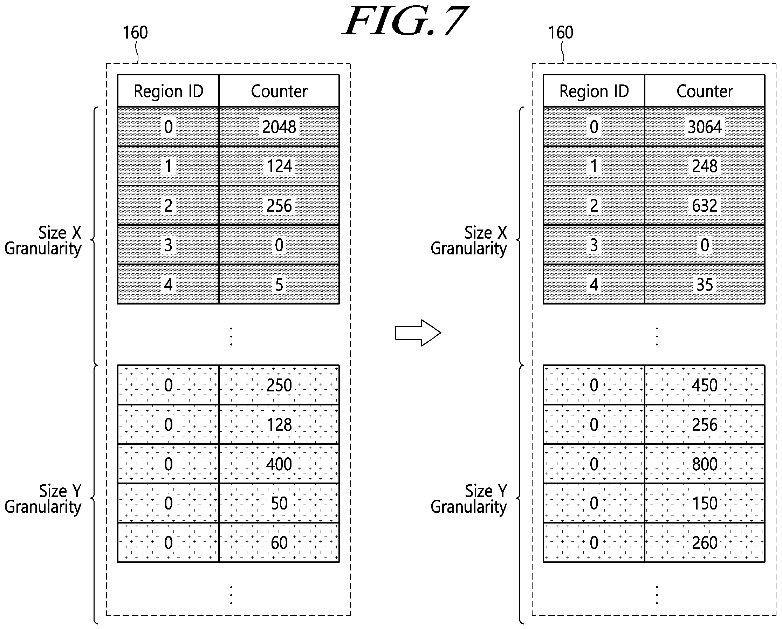

For example, referring to FIG. 7, operation frequency information on unit storage regions (Size X) may be managed by the monitoring unit 150. The monitoring unit 150 may start management of operation frequency information on the unit storage sub-regions (Size Y) included in the unit storage region with the region ID of 0, for which operation frequency information appears high.

After management of operation frequency information on the unit storage sub-regions begins, the monitoring unit 150 may manage operation frequency information for the unit storage regions and the unit storage sub-regions.

For example, referring to FIG. 7, after management of operation frequency information on the unit storage sub-regions begins, the monitoring unit 150 may accumulate and manage operation frequency information of the unit storage regions. Operation frequency information of the unit storage regions may be managed by changing the information from 2048, 124, 256, 0 and 5 to 3064, 248, 632, 0 and 35.

The monitoring unit 150 may accumulate and manage operation frequency information of the unit storage sub-regions while managing operation frequency information of the unit storage regions. Referring to FIG. 7, operation frequency information of the unit storage sub-regions may be managed by changing from 250, 128, 400, 50 and 60 to 450, 256, 800, 150 and 260.

By continuously managing operation frequency information of the unit storage regions after management of operation frequency information of the unit storage sub-regions begins, the monitoring unit 150 may adjust operation frequency information to be stored and managed in the buffer memory 160 according to changes in operation frequencies.

The monitoring unit 150 may accumulate and manage operation frequency information over time as in the above-described example, or in other embodiments may manage operation frequency information based on operation frequency monitored for a unit period of time.

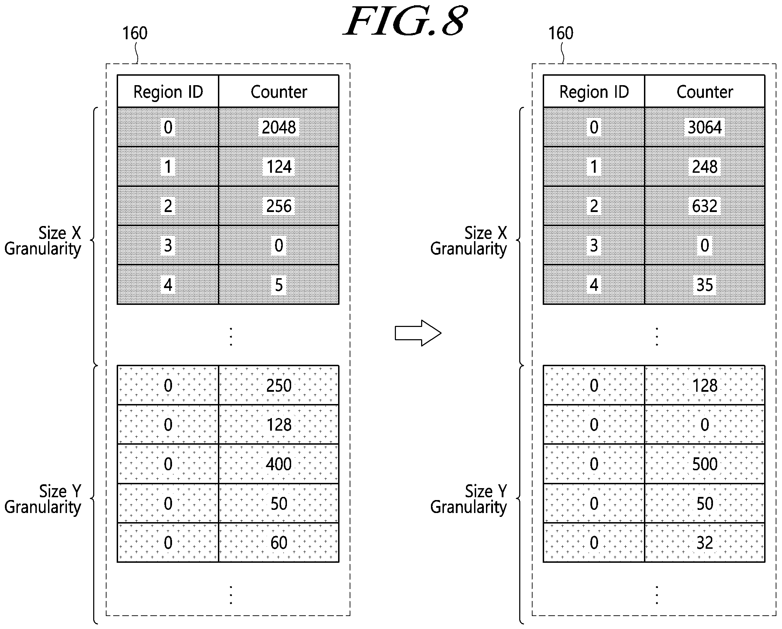

For example, referring to FIG. 8, while managing operation frequency information of unit storage regions, as operation frequency information of the unit storage region with a region ID of 0 increases, operation frequency information of the corresponding unit storage sub-regions may be managed.

The monitoring unit 150 may accumulate and manage operation frequency information for the unit storage regions. The monitoring unit 150 may manage operation frequency information for the unit storage sub-regions on the basis of operation frequencies over a unit of time. The monitoring unit 150 may reset operation frequency information for the unit storage sub-regions each time the unit of monitoring time elapses, and thereafter, may store and manage operation frequency information in the buffer memory 160 on the basis of monitored operation frequencies.

Since information based on operation frequencies per unit time is provided by the monitoring unit 150, hot data and cold data may be distinguished according to points in time when operation frequency information is provided.

In some embodiments, the monitoring unit 150 may generate and manage operation frequency information on the unit storage sub-regions using both total accumulated values and accumulated values per unit time.

For example, when a unit storage region whose operation frequency information is equal to or greater than the threshold occurs among all unit storage regions, the monitoring unit 150 may store and manage, in the buffer memory 160, accumulated values over time and accumulated values per unit time on the basis of the operation frequencies of the plurality of unit storage sub-regions included in the corresponding unit storage region.

Since the monitoring unit 150 detects a memory region with a high operation frequency in units of unit storage regions and provides operation frequency information on unit storage sub-regions that reflect more accurate operation frequency information, and because the size of unit storage regions is larger than the size of unit storage sub-regions, hot data and cold data may be distinguished by the host device 200 by using total accumulated values and accumulated values per unit time.

In some embodiments, the monitoring unit 150 may provide operation frequency information on unit storage regions as accumulated values per unit time.

The monitoring unit 150 may manage operation frequency information on other unit storage regions after monitoring of the operation frequencies of unit storage sub-regions is started, and may generate and manage operation frequency information for unit storage sub-regions included in a new unit storage region.

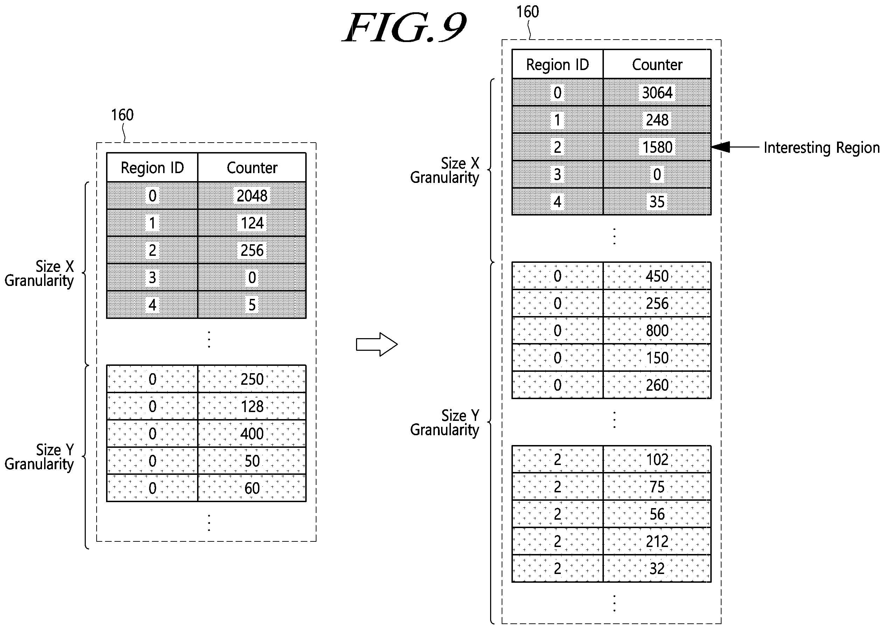

For example, referring to FIG. 9, after starting management of operation frequency information on the unit storage sub-regions included in the unit storage region with a region ID of 0, the monitoring unit 150 may accumulate and manage operation frequency information for another unit storage region.

Referring to FIG. 9, when operation frequency information on a unit storage region with a region ID of 2 becomes equal to or greater than a threshold, the monitoring unit 150 may store and manage, in the buffer memory 160, operation frequency information based on the operation frequencies of unit storage sub-regions included in the corresponding unit storage region with a region ID of 2.

After starting management of operation frequency information on unit storage sub-regions corresponding to a unit storage region with a region ID of 0, the monitoring unit 150 may provide operation frequency information on new unit storage sub-regions through management of operation frequency information on corresponding unit storage regions. Operation frequency information on unit storage sub-regions whose operation frequency information is requested may be managed while efficiently using the storage space of the buffer memory 160.

The monitoring unit 150 may manage operation frequency information on a memory region allocated to the host device 200, and when receiving a deallocation request for the corresponding memory region from the host device 200, may deallocate the memory region and delete operation frequency information associated with the corresponding memory region.

In order to efficiently use the storage space of the buffer memory 160, the monitoring unit 150 may determine whether to delete operation frequency information using operation frequency information for unit storage regions or unit storage sub-regions.

For example, the monitoring unit 150 may delete from the buffer memory 160 operation frequency information on unit storage sub-regions included in a corresponding unit storage region when an increase rate per unit time of a frequency value of the corresponding unit storage region is less than a preset first reference value.

The monitoring unit 150 may delete operation frequency information on the unit storage sub-regions and maintain operation frequency information on the unit storage region.

Operation frequency information for unit storage sub-regions may be generated on the basis of the accumulated value of operation frequency information for a corresponding unit storage region, and operation frequency information for unit storage sub-regions 112 may be deleted on the basis of a change per unit time of operation frequency information for the corresponding unit storage region.

In another example, when an increase rate per unit time of a frequency value according to operation frequency information for a unit storage sub-region is less than a preset second reference value, the monitoring unit 150 may delete operation frequency information of the unit storage sub-region from the buffer memory 160.

Operation frequency information for a unit storage sub-region may be generated on the basis of operation frequency information of a corresponding unit storage region, and operation frequency information for a unit storage sub-region may be deleted on the basis of operation frequency information of the unit storage sub-region.

Efficient use of the storage space of the buffer memory 160 includes deleting operation frequency information by the monitoring unit 150 as in the above-described examples. For example, when storage of additional operation frequency information in the buffer memory 160 is required, the monitoring unit 150 may select operation frequency information to delete.

In some embodiments, the monitoring unit 150 may delete operation frequency information according to a command from the host device 200.

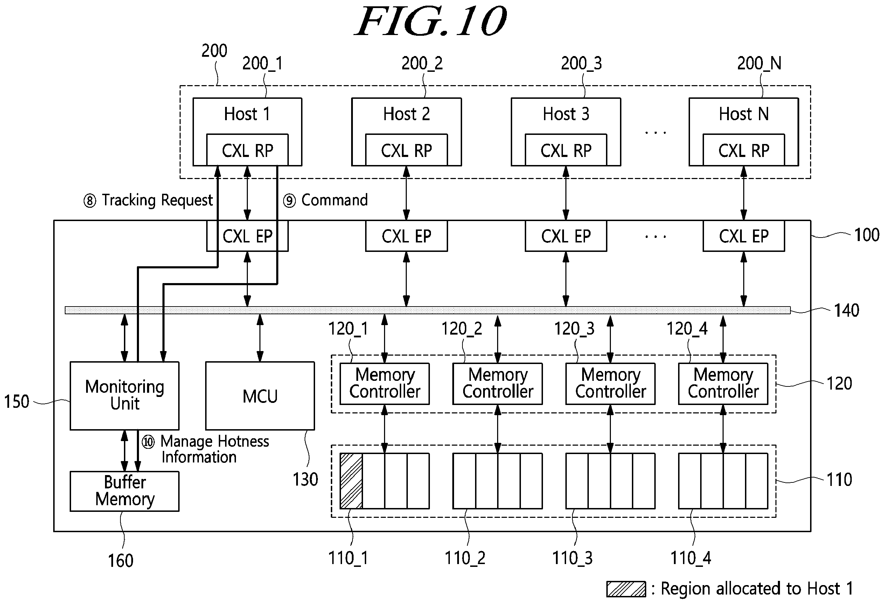

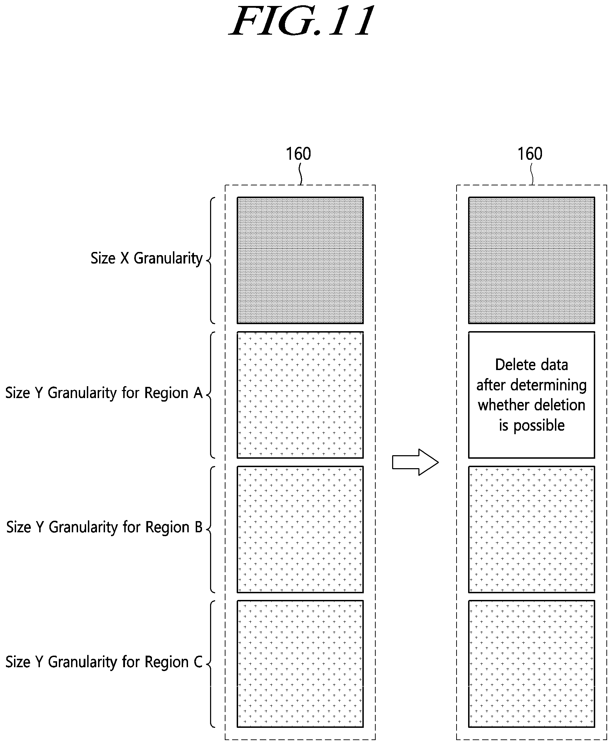

FIGS. 10 and 11 are diagrams illustrating a method in which a monitoring unit of a memory system manages operation frequency information according to an embodiment of the present disclosure.

Referring to FIG. 10, a monitoring unit 150 may store and manage, in a buffer memory 160, operation frequency information for a memory region, in a memory 110, that is allocated to a first host 200_1.

The operation frequency information for the memory region allocated to the first host 200_1 includes operation frequency information of unit storage regions included in the memory region. The monitoring unit 150 may store and manage, in the buffer memory 160, operation frequency information of at least one unit storage sub-region included in the unit storage region.

When the storage space of the buffer memory 160 is insufficient, or an increase rate per unit time of operation frequency information for the unit storage region or the unit storage sub-region is less than a preset reference value, the monitoring unit 150 may transmit a request to ask the first host 200_1 whether to continue tracking operation frequency information on the corresponding unit storage region (@). For example, operation frequency information for the unit storage region 111 may be a certain value (e.g., p is an integer greater than 0) at a first time. And operation frequency information for the unit storage region 111 may be a certain value (e.g., q is an integer greater than 0) at a second time that the unit time is passed after the first time. The increase rate per unit time may be calculated as (q-p)/unit time. And the monitoring unit 150 may continue tracking operation frequency information when the increase rate per unit time is greater than or equal to the preset reference value. The monitoring unit 150 may transmit the request to ask the first host 200_1 whether to continue tracking operation frequency information when the increase rate per unit time is less than the preset reference value.

In response to the request from a memory system 100, the first host 200_1 may transmit, to the memory system 100, a command indicating whether to maintain operation frequency information (@).

For example, the first host 200_1 may transmit a command to delete operation frequency information to the memory system 100.

In other embodiments, the first host 200_1 may transmit a command, to the memory system 100, requesting transmission of operation frequency information. After checking the operation frequency information, the first host 200_1 may determine whether to migrate data of the corresponding memory region, whether to maintain the operation frequency information, etc. On the basis of the operation frequency information, the first host 200_1 may transmit, to the memory system 100, a command to delete the operation frequency information.

The monitoring unit 150 may manage the operation frequency information stored in the buffer memory 160 according to the command received from the first host 200_1 ((⑩)).

The monitoring unit 150 may delete the operation frequency information for the memory region allocated to the first host 200_1 from the buffer memory 160. The monitoring unit 150 may maintain operation frequency information for the unit storage region and delete operation frequency information for the unit storage sub-region.

For example, referring to FIG. 11, the monitoring unit 150 may store operation frequency information of a unit storage region having a first size of X in the buffer memory 160. The monitoring unit 150 may store operation frequency information for unit storage sub-regions of the unit storage region. Examples of unit storage sub-regions with a second size of Y include regions A, B and C whose operation frequency information is equal to or greater than a threshold.

The monitoring unit 150 may ask a host device 200 whether to delete operation frequency information. For example, the monitoring unit 150 may ask a host in host device 200 allocated the region A whether to delete operation frequency information. For example, the region A may be a region whose increase rate per unit time of operation frequency information is less than a reference value.

The monitoring unit 150 may delete operation frequency information for the unit storage sub-region included in the region A according to a command from the host device 200. The monitoring unit 150 may maintain operation frequency information of the unit storage region corresponding to the region A.

Since the monitoring unit 150 deletes operation frequency information according to a command from a host device 200, the monitoring unit 150 may manage operation frequency information on a memory region allocated to the host device 200 and provide the operation frequency information to the host device 200 while efficiently using the storage space of the buffer memory 160.

The management load of the allocated host device 200 is reduced by using a memory region of the memory system 100, and through data management based on operation frequency information on the memory region, data processing performance of the host device 200, which uses both the local memory and the memory system 100, may be improved.

Although various embodiments of the present disclosure have been described with particular specifics and varying details for illustrative purposes, those skilled in the art will appreciate that various modifications, additions and substitutions may be made based on what is disclosed or illustrated in the present disclosure without departing from the spirit and scope of the present disclosure as defined in the following claims.

## Claims

1. A memory system comprising:
at least one memory including a plurality of unit storage regions, each of the plurality of unit storage regions including a plurality of unit storage sub-regions; and
a monitoring unit configured to generate and manage first operation frequency information based on an operation frequency of at least one of the plurality of unit storage regions, and to generate and manage second operation frequency information based on an operation frequency of each of the plurality of unit storage sub-regions included in some of the plurality of unit storage regions in which the first operation frequency information exists among the plurality of unit storage regions.

2. The memory system according to claim 1, wherein when a frequency value according to the first operation frequency information is equal to or greater than a preset threshold, the monitoring unit generates the second operation frequency information for each of the plurality of unit storage sub-regions included in a unit storage region corresponding to the first operation frequency information.

3. The memory system according to claim 2, wherein after generating the second operation frequency information, the monitoring unit accumulates and manages the first operation frequency information.

4. The memory system according to claim 2, wherein the second operation frequency information includes at least one of a total accumulated value or an accumulated value per unit time of an operation frequency of each of the plurality of unit storage sub-regions.

5. The memory system according to claim 1, wherein the monitoring unit generates the first operation frequency information on the basis of an operation frequency of a unit storage region allocated to a host device according to an allocation request received from the host device, and when a deallocation request for the unit storage region is received from the host device, deletes the first operation frequency information and the second operation frequency information associated with the unit storage region.

6. The memory system according to claim 1, wherein when receiving a read request for the first operation frequency information or the second operation frequency information associated with a unit storage region allocated to a host device among the plurality of unit storage regions, the monitoring unit provides the first operation frequency information or the second operation frequency information to the host device.

7. The memory system according to claim 1, wherein the monitoring unit requests a host device allocated a unit storage sub-region corresponding to the second operation frequency information to transmit a command indicating whether to maintain the second operation frequency information, and when receiving, from the host device, a command indicating deletion of the second operation frequency information, deletes the second operation frequency information.

8. The memory system according to claim 1, wherein when an increase rate per unit time of a frequency value according to the first operation frequency information is less than a preset first reference value, the monitoring unit deletes the second operation frequency information of the plurality of unit storage sub-regions included in a unit storage region corresponding to the first operation frequency information.

9. The memory system according to claim 1, wherein when an increase rate per unit time of a frequency value according to the second operation frequency information is less than a preset second reference value, the monitoring unit deletes the second operation frequency information.

10. The memory system according to claim 1, wherein the first operation frequency information is generated on the basis of at least one of an access frequency, a program operation frequency or a read operation frequency for a unit storage region.

11. The memory system according to claim 1, wherein the second operation frequency information is generated on the basis of at least one of an access frequency, a program operation frequency or a read operation frequency for a unit storage sub-region.

12. The memory system according to claim 1, wherein the first operation frequency information and the second operation frequency information are stored and managed in a buffer memory.

13. A control device comprising:
a buffer memory; and
a monitoring unit configured to generate first operation frequency information based on an operation frequency of at least one of a plurality of unit storage regions included in a memory, to store the first operation frequency information in the buffer memory, to generate second operation frequency information based on an operation frequency of each of a plurality of unit storage sub-regions included in some of unit storage regions in which the first operation frequency information exists among the plurality of unit storage regions, and to store the second operation frequency information in the buffer memory.

14. The control device according to claim 13, wherein when a frequency value according to the first operation frequency information is equal to or greater than a preset threshold, the monitoring unit generates the second operation frequency information on each of the plurality of unit storage sub-regions included in a unit storage region corresponding to the first operation frequency information, and stores the second operation frequency information in the buffer memory.

15. The control device according to claim 13, wherein when an increase rate per unit time of a frequency value according to the first operation frequency information is less than a preset first reference value, the monitoring unit deletes, from the buffer memory, the second operation frequency information of the plurality of unit storage sub-regions included in a unit storage region corresponding to the first operation frequency information.

16. The control device according to claim 13, wherein when an increase rate per unit time of a frequency value according to the second operation frequency information is less than a preset second reference value, the monitoring unit deletes, from the buffer memory, the second operation frequency information.

17. A computing system comprising:
a host device; and
a memory device including a plurality of storage regions, and configured to allocate at least a part of the plurality of storage regions according to a request from the host device, generate and manage operation frequency information based on an operation frequency of a storage region allocated to the host device among the plurality of storage regions and provide the operation frequency information to the host device.

18. The computing system according to claim 17, wherein the memory device generates and manages first operation frequency information based on an operation frequency of a unit storage region of a first size among the plurality of storage regions, and generates and manages, when a frequency value according to the first operation frequency information is equal to or greater than a preset threshold, second operation frequency information based on an operation frequency of each of a plurality of unit storage sub-regions included in the unit storage region and having a second size, the second size being smaller than the first size.

19. The computing system according to claim 17, wherein when receiving, from the host device, a deallocation request for the allocated storage region or a deletion request for the operation frequency information, the memory device deletes the operation frequency information.

20. The computing system according to claim 17, wherein when an increase rate per unit time of a frequency value according to the operation frequency information is less than a preset reference value, the memory device deletes the operation frequency information.
